# EUROPÄISCHE PATENTSCHRIFT

(11) **EP 2 922 775 B1**
(45) Veröffentlichungstag und Bekanntmachung des Hinweises auf die Patenterteilung: **28.09.2016**
(21) Anmeldenummer: 13747349.2
(22) Anmeldetag: 18.07.2013
(51) Int. Cl.: B65G 13/075

(54) **ROLLE MIT EINER WIRBELSTROMBREMSE**
ROLLER COMPRISING AN EDDY CURRENT BRAKE
GALET POURVU D'UN FREIN À COURANTS DE FOUCAULT

(43) Veröffentlichungstag der Anmeldung: 30.09.2015
(73) Patentinhaber: Interroll Holding AG, 6592 Sant' Antonino (CH)
(72) Erfinder: KÜPPER, Gerd, 32107 Bad Salzuflen (DE); JOSTES, Dirk, 33602 Bielefeld (DE)
(74) Vertreter: Müller-Boré & Partner Patentanwälte PartG mbB
(86) Internationale Anmeldenummer: PCT/EP2013/002134
(87) Internationale Veröffentlichungsnummer: WO 2015/007299

(56) Entgegenhaltungen:
- EP-A1- 1 243 528
- NL-C2- 1 021 991

## Beschreibung

Die Erfindung betrifft eine Rolle mit einer Wirbelstrombremse nach dem Oberbegriff von Anspruch 1.

Eine derartige Rolle ist aus der EP 1 243 528 A1 bekannt, die im Innern eines äußeren Rohres eine Bremseinrichtung in Form einer Wirbelstrombremse aufweist. Hierzu ist das äußere Rohr, also der Rollenmantel auf seiner Innenfläche mit einem Einsatzkörper aus elektrisch gut leitfähigem Material wie Kupfer oder Aluminium ausgebildet. Der Rollenmantel ist drehbar auf einer Stange gelagert, die in einem ortsfesten Gestell befestigt ist. Auf der Stange sind fest angeordnete Dauermagnete mit Polen angeordnet, die sich im Abstand eines Luftspaltes zu dem Einsatzkörper befinden. Bei einer Drehung des Rollenmantels gemeinsam mit dem Einsatzkörper relativ zu den ortsfesten Polen werden in dem Einsatzkörper durch das Magnetfeld Wirbelströme induziert, die der Drehbewegung des Rollenmantels ein Bremsmoment entgegensetzen, welches mit steigender Drehzahl zunimmt.

Zu diesem, nachfolgend als erstes Bremsmoment bezeichnet, addiert sich ein zweites Bremsmoment hinzu, wenn das Magnetfeld ebenso Wirbelströme in dem aus elektrisch leitendem, nicht magnetisierbarem Werkstoff wie beispielsweise Aluminium, oder Edelstahl gefertigten Rollenmantel verursacht. Wenn der Rollenmantels außerdem aus magnetisierbarem Werkstoff wie beispielsweise Stahl hergestellt ist, kommt es weiter zu einer Einwirkung des Magnetfelds auf den Rollenmantel infolge seiner Drehung um das ortsfeste Magnetfeld zu einer stetigen Ummagnetisierung, womit ein drittes Bremsmoment auftritt.

Die Verwendung einer derartigen Rolle erfolgt an einer Rollenbahn, die mit einer Mehrzahl von Rollen ohne jegliche Bremseinrichtung ausgestattet ist und mit einer leicht geneigten Förderstrecke verläuft. Das Fördern von darauf aufliegendem Fördergut erfolgt ohne weiteren Antrieb durch die vom Eigengewicht verursachte Hangabtriebskraft. Im Betrieb solcher Rollenbahn kann es aus verschiedenen Gründen zu einem Stillstand des Förderguts kommen, so dass sich das Fördergut ohne freien Zwischenraum zwischen einzelnen Fördergut-Teilen aufstaut. Sobald dann der Weitertransport des Förderguts wieder einsetzt, ist es erforderlich, dass sich das Fördergut selbständig wieder auf der geneigten Förderstrecke in Bewegung setzt. Der erläuterte Sachverhalt führt zu der Schwierigkeit, einerseits ein selbsttätiges Abrollen des Förderguts auf der Rollenbahn durch die geneigte Förderstrecke zu erreichen, andererseits aber zu vermeiden, dass das Fördergut eine unangemessene größere Geschwindigkeit annimmt. Zur Kontrolle der Fördergut-Geschwindigkeit ist bekannt, in der Rollenbahn an geeigneten Positionen Rollen mit eingebauten Bremsen mechanischer oder elektrischer Bauart ähnlich einem Elektromotor oder als Wirbelstrombremsen einzusetzen.

Bei dem Einsatz der bekannten Rolle mit einer Wirbelstrombremse muss in Kauf genommen werden, dass ein selbsttätiges Anfahren von zuvor gestopptem Förderguts nur durch Inkaufnahme einer stärkeren Neigung der Förderbahn erreicht werden kann, woraus wiederum größere Energien abzufangen sind, wenn sich Fördergut aufstaut.

Aus der DE 28 21 973 A1 ist eine magnetische Drehmomentkupplung bekannt, bei der Wirbelströme infolge von relativen Bewegungen von stationären Dauermagneten zu einem Wirbelstromträger und auch Ummagnetisierungen an Bauteilen zu einer erwünschten Drehmomentübertragung genutzt werden. Die Druckschrift ist lediglich hinsichtlich der tassenförmig ausgebildeten Kupplungsteile von Interesse.

Zum Stand der Technik über Dauermagnete, Magnetismus und Wirbelstrombremsen wird auf das Lehrbuch "Europa-Lehrmittel, ELEKTRONIK, 1. Teil: Grundlagen-Elektronik 3. Auflage", Seiten 73 bis 75 und Seiten 96 und 97 verwiesen.

Der Erfindung liegt die Aufgabe zugrunde, eine zu niedrigen Kosten herzustellende Weiterbildung der bekannten Rolle mit einer Wirbelstrombremse anzugeben, die dem Anlaufen der Rolle einen kleinstmöglichen Widerstand entgegensetzt und die Wirksamkeit der Wirbelstrombremse erhöht.

Die Lösung dieser Aufgabe erfolgt bei der Rolle nach dem Oberbegriff von Anspruch 1 durch dessen kennzeichnende Merkmale.
Die Ausgestaltung der Wirbelstrombremse mit einem festen, relativ zu dem stationären Magnetfeld unbewegbaren Abschirmrohr aus ferromagnetischem Material führt einerseits dazu, ein Bremsmoment infolge einer stetigen Ummagnetisierung auszuschalten und andererseits dazu, das von dem Dauermagneten ausgehende Magnetfeld einzig für die Wirbelstrombremse zu nutzen. Dies führt dazu, dass das zu Beginn einer Drehung des Rollenmantels entgegenstehende Bremsmoment von dem Wert Null durch die beginnende Drehung mit der Wirkung des Wirbelstroms ansteigt. Somit wird das Anlaufen des Rollenmantels erleichtert.

Ein weiterer Vorteil ergibt sich daraus, dass mit dem ferromagnetischen Abschirmrohr die Rolle ungeachtet des für den Rollenmantel verwendeten Werkstoffs ein Ausbreiten von magnetischer Emission verhindert wird.

Schließlich führt die Anordnung des Abschirmrohres zu dem weiteren Vorteil, dass mit Ausnahme von Anforderungen an eine gewisse Festigkeit keinerlei Anforderungen an den Werkstoff des Rollenmantels erfüllt sein müssen. Daraus ergeben sich Vorteile für einen trägheitsarmen und zu niedrigen Kosten herzustellenden Rollenmantel, wie dies beispielsweise durch die Verwendung von Kunststoff erreicht werden kann.

Mit den Merkmalen der Ansprüche 2 bis 5 werden vorteilhafte Weiterbildungen angegeben. Das Merkmal von Anspruch 6 führt zu einer vorteilhaften Raumausnutzung und zu weiteren Gestaltungsmöglichkeiten für den Magneten. Eine Kosten sparende und kompakte Bauweise wird mit den Merkmalen von Anspruch 7 erzielt. Eine weitere vorteilhafte Weiterbildung wird mit dem Merkmal von Anspruch 8 erzielt. Die Merkmale der Ansprüche 9 und 10 ermöglichen, das Bremsmoment der Wirbelstrombremse den Einsatzbedingungen anzupassen.

Weitere Merkmale, Vorteile und Einzelheiten der Erfindung ergeben sich aus der folgenden Beschreibung von Ausführungsbeispielen anhand der Zeichnung.

Es zeigt
- Fig. 1: eine Rollenbahn mit Fördergut,
- Fig. 2: eine schematisch Darstellung der Rolle eines Ausführungsbeispiels 1,
- Fig. 3: eine schematisch Darstellung der Rolle eines Ausführungsbeispiels 2,
- Fig. 4: eine schematisch Darstellung der Rolle eines Ausführungsbeispiels 3,
- Fig. 5: eine Halbschnitt-Ansicht der ausgeführten Rolle,
- Fig. 6: ein Bauteil aus der Rolle gemäß Fig. 5,
- Fig. 7: eine Ansicht des Bauteils in Richtung des Sichtpfeils VII in Fig. 6,
- Fig. 8: einen Ausschnitt einer Weiterbildung von Bauteilen gemäß Fig. 5 in verkleinertem Maßstab,
- Fig. 9: eine Weiterbildung des Magneten als Elektromagnet in einer der Fig. 5 entsprechenden Ansicht und
- Fig. 10: eine Ansicht auf eine Stirnseite des Elektromagneten gemäß dem Sichtpfeil X in Fig. 9.

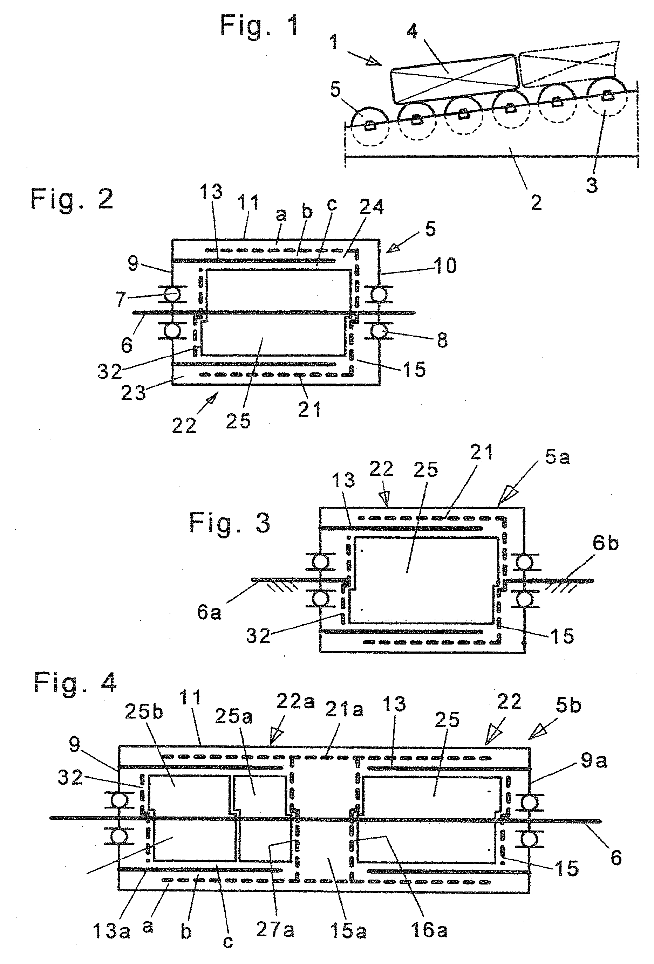

In Fig. 1 ist eine Rollenbahn 1 mit einem ortfesten Gestell 2 dargestellt, an dem eine Mehrzahl von Rollen 3 fest angeordnet sind, die eine geneigte Förderstrecke bilden. Die Rollen 3 sind frei ohne einen Antrieb oder eine Bremse ausgeführt und unterstützen ein darauf aufliegendes Fördergut 4, welches danach trachtet, durch sein Gewicht auf der Förderstrecke herabzurollen. Weiter ist an der Rollenbahn 1 eine erfindungsgemäße Rolle 5 mit einer Wirbelstrombremse angeordnet.

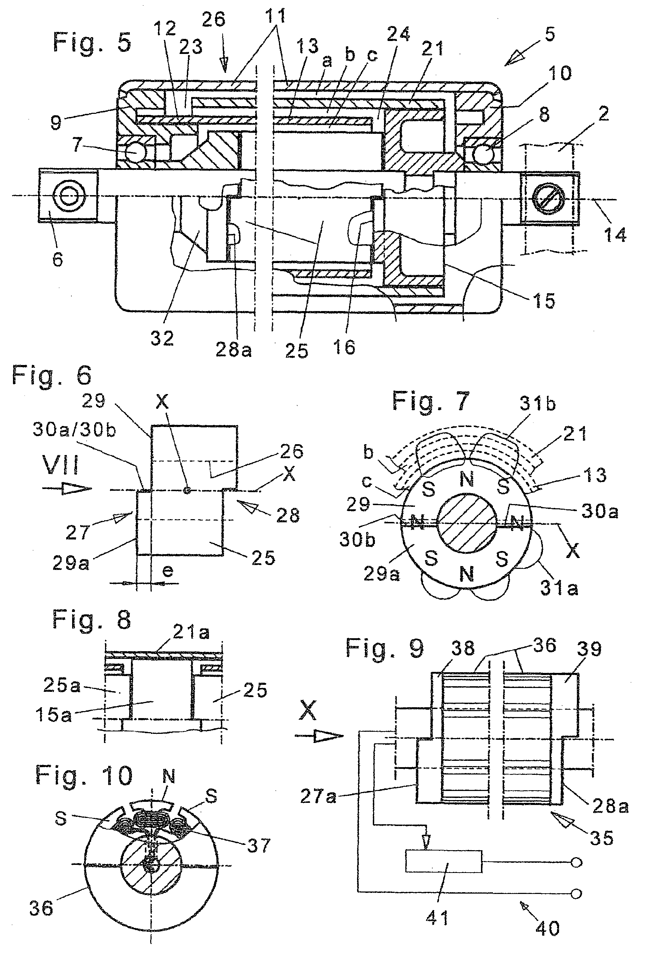

Das Ausführungsbeispiel 1 (Fig. 2 und 5) mit der Rolle 5 weist eine auf einer ortsfest an dem Gestell 2 befestigte Stange 6 auf, auf der Lager 7, 8 in Form von Rillenkugellagern aufgenommen sind. Deren Außenringe sind in Deckeln 9, 10 durch festen Sitz aufgenommen. Gemäß Fig. 5 ist die Stange 6 in dem Gestell 2 durch eine Schraubenverbindung (nicht bezeichnet) achsial und radial festgelegt.

Die Deckel 9, 10 sind fest mit Enden eines röhrförmigen Rollenmantel 11 verpresst. In konzentrischer Anordnung mit der Stange 6 und dem Rollenmantel 11 ist an dem Deckel 9 ein Ende 12 eines Rohres befestigt. Das Rohr wird nachfolgend als Wirbelstrom-Aufnehmer 13 bezeichnet. Durch die Stange 6 erstreckt sich eine Achse 14.

Das freie Ende des Wirbelstrom-Aufnehmers 13 erstreckt sich bis in die Nähe eines Trägers 15, der mit der Stange 6 zu einem Bauteil vereint ist. Hierzu ist der Träger 15 als Druckgussteil aus nicht magnetisierbarem Werkstoff wie beispielsweise eine Aluminium-Zink-Legierung hergestellt ist und die Stange 6 drehfest und formschlüssig umfasst. Der Träger 15 ist an einer Stirnseite 16 mit zwei zueinander axial verschobenen Stirnseiten-Hälften und zwei sie verbindenden diametral verlaufenden Flächen ausgebildet. Für Einzelheiten der Stirnseite 16 wird auf die nachfolgend noch zu beschreibende Stirnseite eines Dauermagneten verwiesen.

Weiter ist der Träger 15 mit einem konzentrisch zu der Achse 4 ausgebildeten zylindrischen Mantel 19 vorgesehen, auf dem ein Ende 20 eines Abschirmrohres 21 aus ferromagnetischem Werkstoff wie beispielsweise Stahl hergestellt ist. Der Rollenmantel 11, das Abschirmrohr 21, und der Wirbelstrom-Aufnehmer 13 bilden wesentliche Bauteile einer Wirbelstrombremse 22.

Mit der Anordnung begrenzen die Innenbohrung (nicht bezeichnet) des Rollenmantels 11 und der Mantel des Wirbelstrom-Aufnehmers 13 zwischen sich einen kreisringringförmigen Zwischenraum 23. In diesen ragt das freie Ende des Abschirmrohres 21 bis in die Nähe des Deckels 9 hinein. Die Wandstärke des Abschirmrohrs 21 und der Zwischenraum 23 sind derart bemessen, dass zwei kreisringförmige Luftspalten a und b ausgebildet sind.

Weiter ist ein Zwischenraum 24 zwischen dem Abschirmrohr 21 und einem Dauermagneten 25 ausgebildet, der auf der Stange 6 aufgenommen ist.
Der Dauermagnet 25 ist mit einer Bohrung 26 ausgebildet, die ermöglicht, dass der Dauermagnet 25 spielfrei auf die Stange 6 aufschiebbar ist. Der Zwischenraum 24 ist derart bemessen, dass zwischen dem Dauermagnet 25 und dem Wirbelstrom-Aufnehmer 13 ein kreisringförmiger Luftspalt c ausgebildet ist.

Der Dauermagnet 25 weist eine linke Stirnseite 27 und eine rechte Stirnseite 28 auf. Die linke Stirnseite 27 ist mit zwei Stirnseiten-Hälften 29 und 29a ausgebildet, die axial um einen Abstand e zueinander versetzt sind und hierdurch zwei miteinander fluchtende Flächen 30, 30a ausbilden. In gleicher Weise ist die rechte Stirnseite 28 ausgebildet, die geometrisch der um 180 Grad im Drehsinn des Uhrzeigers um eine Achse X gedrehten Stirnseite 27 entspricht. Weiter wird angegeben, dass die Gestaltung der Stirnseite 16 an dem Träger 15 der Gestaltung der linken Stirnseite 27 entspricht.

Gemäß Fig. 7 ist der Dauermagnet 25 in der Form "8-polig, N- und S-Pol wechselweise außen" magnetisiert, wobei die Nordpole N und die Südpole S in Bezug auf die Achse X, ebenso in Bezug auf die Flächen 30, 30a symmetrisch ausgerichtet sind. Hieraus folgt, dass der Dauermagnet 25 ungeachtet seiner Lage mit der Stirnseite 16 oder der Stirnseite 27 zur Anlage an dem Träger 15 zur Anlage gebracht werden kann.

Zwischen den Polen N, S stellen sich gedanklich magnetische Feldlinien ein. Diese verlaufen außerhalb des Magneten vom Nordpol N zum Südpol S, innerhalb vom Südpol S zum Nordpol N und bilden einen geschlossenen Verlauf. Die Feldlinien nehmen je nach ihrer Umgebung durch Luft oder durch ferromagnetisches Material unterschiedliche Verläufe ein. In Fig. 7 zeigt eine Feldlinie 31 a einen Verlauf durch Luft, wenn sich also in der Nähe kein ferromagnetisches Material befindet. Im Gegensatz dazu nimmt eine Feldlinie 31 b einen abgelenkten Verlauf ein, wenn sich in der Nähe ferromagnetisches Material wie das Abschirmrohr 21 befindet. Dabei verläuft die Feldlinie 31 b durch den Wirbelstrom-Träger 13, in dem damit Wirbelströme entstehen. Weiter ist die Feldlinie 31 b als eine in sich geschlossene Linie dargestellt.

Mit der Gestaltung der Stirnseite 16 an dem Träger 15, der Stirnseiten 27, 28 an dem Dauermagnet 25 und einer der Stirnseite 28 entsprechenden Stirnseite 28a an einem Endstück 32 wird erreicht, dass der Dauermagnet 25 mit dem Träger 15 formschlüssig nach Art einer Klauenkupplung ineinander greifend festgelegt ist. Weiter erfolgt eine axiale Festlegung der Stange 6 mit dem Träger 15 und der darauf aufgenommenen Bauteile wie der Dauermagnet 25 und das Endstück 32 durch den Rollenmantel 11 mit den die Lager 7, 8 aufnehmenden Deckeln 9, 10.

Hinsichtlich der verwendeten Werkstoffe wird angegeben, dass
- der Rollenmantel 11 ein Rohr aus einem beliebigen Werkstoff wie Stahl, Aluminium oder Kunststoff beispielsweise mit einer Wandstärke von 2 bis 5 Millimeter,
- die Abschirmrohre 21, 21a aus magnetisierbarem Werkstoff wie Stahl einer bestimmten Sorte mit guter Leitfähigkeit für magnetische Feldlinien,
- und die Wirbelstrom-Aufnehmer 13, 13a aus elektrisch gut Strom leitendem, nicht magnetisierbarem Werkstoff wie Kupfer oder Aluminium mit einer Wandstärke von beispielsweise 3 Millimeter hergestellt sind.

Das Ausführungsbeispiel 2 (Fig. 3) weist eine Rolle 5a auf, die in ihrem Aufbau mit Ausnahme der Stange 6 dem der Rolle 5 entspricht. Abweichend davon ist die Rolle 5a auf zwei Stangenteilen 6a, 6b gelagert, die jeweils fest an dem Gestell 2 eingespannt sind. An ihren freien Enden sind die Stangenteile 6a, 6b fest mit dem Träger 15 und dem Endstück 32 verbunden, die zwischen sich den Dauermagneten 25 aufnehmenden.

Das Ausführungsbeispiel 3 (Fig. 4) weist eine Rolle 5b auf. Auf der Stange 6 ist drehfest ein Träger 15a vorgesehen, der an seinen Stirnseiten 16a und 27a jeweils wie die genannten Stirnseiten 16 und 27 ausgebildet sind. Der Träger 15a befindet sich etwa in der Mitte der Längserstreckung des Rollenmantels 11 fest auf der Stange 6. An dem Träger 15a ist ein Abschirmrohr 21 a fest verbunden, welches im Durchmesser und hinsichtlich des Werkstoffs dem genannten Abschirmrohr 21 entspricht. Weiter erstreckt sich das Abschirmrohr 21 a als einteiliges Bauteil über die seitlich des Trägers 15a angeordneten Dauermagnete 25, 25a, 25b. Diese entsprechen in ihrem Aufbau, abgesehen von den unterschiedlichen Längen der Dauermagnete 25a und 25b dem beschriebenen Dauermagnet 25. Wie dieser sind die Dauermagneten 25a, 25b wie beschrieben stirnseitig drehfest und axial auf der Stange 6 festgelegt. Mit den unterschiedlich lang ausgebildeten Dauermagneten 25, 25a, 25b werden unterschiedlich starke Dauermagneten bereitgestellt, die eine Anpassung des gewünschten Gesamt-Bremsmoments der Wirbelstrombremsen 22 und 22a ermöglichen.

Das Ausführungsbeispiel 4 (Fig. 9 u. 10) ist anstatt des Dauermagneten ein Elektromagnet 35 vorgesehen, der in seinen Abmessungen denen des vorstehend beschriebenen Dauermagneten 25 entspricht. Gemäß Fig. 10 sind ähnlich einem Elektromotor an einem Anker 36 Pole ausgebildet, die infolge von mit Gleichstrom beaufschlagten Wicklungen 37 bekanntlich Nordpole N und Südpole S des Elektromagneten 35 bilden. Der Anker 36 ist stirnseitig mit Deckeln 38, 39 verschlossen. Der Deckel 38 ist an einer Stirnseite 27a entsprechend der Stirnseite 27 und der Deckel 39 mit einer der Stirnseite 28a entsprechend der Stirnseite 28 ausgebildet. Die Versorgung mit Gleichstrom erfolgt über eine elektrische Schaltung 40, die einen Stellwiderstand 41 zur Veränderung des die Wicklungen 37 durchflutenden Stromes aufweist.

Mit der Gestaltung des Elektromagneten 35 einschließlich der dem Dauermagnet 25 entsprechenden Stirnseiten 27a, 28a kann die Rolle 5 anstatt des Dauermagneten 25 mit dem Elektromagnet 35 ausgestattet sein.

Die Arbeitsweise der Rolle 5 ist wie folgt:
Mit dem im Stillstand auf der Rolle 5 aufliegenden Fördergut 4 befindet sich die Rolle 5 in einem Zustand, in dem der Rollenmantel 11 frei von jeglichem Bremsmoment ist. Sobald das Hindernis für die Bewegung des Förderguts 4 auf der Rollenbahn 1 aufgehoben ist, wirkt die von dem Eigengewicht des Förderguts 4 hervorgerufene Hangabtriebskraft und beginnt eine Weiterbewegung des Förderguts 4 und damit die Drehung des Rollenmantels 11 gemeinsam mit dem Wirbelstrom-Aufnehmer 13. Hiermit bewegt sich der Wirbelstrom-Aufnehmer 13 durch das von den Dauermagneten 23 erzeugte Magnetfeld, so dass eine Induzierung von Wirbelstrom in dem Wirbelstrom-Aufnehmer 13 erreicht wird und ein Bremsmoment auf den Rollenmantel 11 ausübt. Ausgehend von Stillstand des Rollenmantels 11 steigt das Bremsmoment damit von einem Wert Null stetig mit zunehmender Drehzahl des Rollenmantels 11 an.

Infolge der Wirkung des stationären, aus magnetischem Stahl gefertigten Abschirmrohres 18, 32 wird eine Ummagnetisierung, also eine Wirkung des von dem ebenso stationären Dauermagneten 25 ausgehenden Magnetfeldes auf den Rollenmantel 11 ausgeschaltet. Damit sind definierte Verhältnisse geschaffen, so dass dem Anlaufen des Rollenmantels 11 anfangs kein Bremsmoment, mit zunehmender Drehzahl aber ein stetig ansteigendes Bremsmoment von der Wirbelstrombremse 13 entgegensteht. Dies bedeutet für die Rollenbahn 1, dass sie mit einer geringen Neigung ausgeführt werden kann und ein Aufstauen von lückenlos aneinander stoßenden Teilen des Förderguts 4 mit geringeren Massenkräften infolge verminderter Fördergeschwindigkeiten erfolgt.

Die geschilderte Arbeitsweise gilt gleichermaßen für die Ausführungsbeispiele 2 bis 4. Das Ausführungsbeispiel 4 gestattet, den die Wicklung des Elektromagneten 35 beaufschlagenden Strom und damit die Stärke des Bremsmoments dem spezifischen Einsatzfall der Rolle 5 entsprechend anzupassen.

**Bezugszeichenverzeichnis:**

| | | | |
|---|---|---|---|
| 1 | Rollenbahn | 26 | Bohrung |
| 2 | Gestell | 27 | 27a linke Stirnseite |
| 3 | Rolle | 28 | rechte Stirnseite |
| 4 | Fördergut | 29 | 29b Stirnseiten-Hälfte |
| 5 | 5a, 5b Rolle mit | 30 | 30a Fläche |
| | Wirbelstrombremse | 31 | 31a Feldlinie |
| 6 | 6a, 6b Stange | 32 | Endstück |
| 7 | Lager | 33 | -- |
| 8 | dto. | 34 | -- |
| 9 | 9a Deckel | 35 | Elektromagnet |
| 10 | dto. | 36 | Anker |
| 11 | Rollenmantel | 37 | Wicklung |
| 12 | Ende | 38 | Deckel |
| 13 | 13a Wirbelstrom-Aufnehmer | 39 | dto. |
| 14 | Achse | 40 | Schaltung |
| 15 | 15a Träger | 41 | Stellwiderstand |
| 16 | 16a Stirnseite | | |
| 17 | -- | | |
| 18 | -- | N | Nordpol |
| 19 | Mantel | S | Südpol |
| 20 | Ende | | |
| 21 | 21 a Abschirmrohr | a | Luftspalt |
| 22 | 22a 22b Wirbelstrombremse | b | dto. |
| 23 | Zwischenraum | c | dto. |
| 24 | dto. | | |
| 25 | 25a, 25b Dauermagnet | e | Abstand |
| | | X | Achse |

## Patentansprüche

1. Rolle (5;5a;5b) mit folgenden Merkmalen:
- ein rohrförmiger Rollenmantel (11;29) der in einer ortsfesten Lagerung (7,8) um eine Achse (14) drehbar gelagert ist,
- eine Wirbelstrombremse (26) mit einem innerhalb des Rollenmantels (11) fest mit diesem verbundenen rohrförmigen Wirbelstrom-Aufnehmer (13;13a,13b) und mit einem ortsfest mit der Lagerung (7,8) verbundenen Magneten (25;25a;25b;35), mit im Abstand eines Luftspalts (c) zu dem Wirbelstrom-Aufnehmer (13;13a) angeordneten Nord- und Südpolen (N, S), **dadurch gekennzeichnet, dass**
- zwischen dem Rollenmantel (11) und dem Wirbelstrom-Aufnehmer (13;13a) ein aus ferromagnetischem Werkstoff, z.B. Stahl, gefertigtes Abschirmrohr (21;21a) hineinragend ausgebildet ist,
- das Abschirmrohr (21;21a) fest an einem Ende mit der ortsfesten Lagerung (7,8) verbunden ist,
- das Abschirmrohr (21 ;21a) im Abstand eines zweiten Luftspalts (a) zu dem Rollenmantel (11) und im Abstand eines dritten Luftspalts (b) zu dem Wirbelstrom-Aufnehmer (13;13a) angeordnet ist
- wobei der zweite (a) und der dritte Luftspalt (b) derart ausreichend groß bemessen sind, dass eine Berührung des Rollenmantels (11) und des Wirbelstrom-Aufnehmers (13;13a) mit dem ortsfesten Abschirmrohr (21;21a) bei Ausführung der Drehung ausgeschlossen ist.

2. Rolle (5;5a, 5b) nach Anspruch 1, **dadurch gekennzeichnet, dass** der Magnet (25;25a;25b;35) an einer seiner Stirnseiten (27,28) formschlüssig mit der ortsfesten Lagerung (7,8) verbunden ist.

3. Rolle (5;5a, 5b) nach Anspruche 1 oder 2, **dadurch gekennzeichnet, dass** der Magnet als Dauermagnet (25,25a,25b) ausgebildet ist.

4. Rolle (5;5a, 5b) nach einem der Ansprüche 1 bis 3, **dadurch gekennzeichnet, dass** mehrere des Magneten (25,25a,25b) vorgesehen sind.

5. Rolle (5;5a;5b) nach einem der vorangehenden Ansprüche, **dadurch gekennzeichnet, dass** sich die Achse (14) durch eine ortsfest angeordnete Stange (6) erstreckt.

6. Rolle (5;5a;5b) nach Anspruch 5, **dadurch gekennzeichnet, dass** die Stange (6) zwei voneinander getrennte, konzentrisch zueinander festgelegte Stangenteile (6a,6b) aufweist..

7. Rolle (5;5a;5b) nach einem der vorangehenden Ansprüche, **dadurch gekennzeichnet, dass** benachbart angeordnete Wirbelstrombremsen (22,22a,22b) ein gemeinsames Abschirmrohr (21a) aufweisen, welches fest mit einem auf der Stange (6) oder mindestens einem der Stangenteile (6a,6b) befestigten Träger (15a) verbunden ist.

8. Rolle (5;5a;5b) nach Anspruch 7, **dadurch gekennzeichnet dass** der Träger (15a) zwischen zwei Wirbelstrombremsen (22,22a) angeordnet ist.

9. Rolle (5;5a, 5b) nach einem der Ansprüche 1 bis 3, **dadurch gekennzeichnet, dass** der Magnet als Elektromagnet (35) ausgebildet ist.

10. Rolle nach Anspruch 9,
**dadurch gekennzeichnet, dass** der Elektromagnet (35) mit einer elektrischen Schaltung (40) verbunden ist, die einen Stellwiderstand (41) aufweist.

## Claims

1. A roller (5; 5a, 5b) comprising the following features:
- a tubular roller shell (11; 29) rotatably supported about an axis (14) in a stationary bearing (7, 8),
- an eddy current brake (26) with a tubular eddy current receiver (13; 13a; 13b) within the roller shell (11) and fixedly connected thereto, and with a magnet (25; 25a; 25b; 35) stationarily connected with the bearing (7, 8), having north and south poles (N, S) arranged at a distance of an air gap (c) from the eddy current receiver (13; 13a),
**characterized in that**:
- a shielding tube (21; 21 a) made of a ferromagnetic material, i.e. steel, is formed between the roller shell (11) and the eddy current receiver (13; 13a) in a way projecting thereinto,
- the shielding tube (21; 21 a) is fixedly connected with the stationary bearing (7, 8) at an end thereof,
- the shielding tube (21; 21 a) is arranged at a distance of a second air gap (a) from the roller shell (11) and at a distance of a third air gap (b) from the eddy current receiver (13; 13a),
- wherein the second (a) and third (b) air gaps are dimensioned sufficiently large so that a contact of the roller shell (11) and of the eddy current receiver (13; 13a) with the stationary shielding tube (21; 21 a) upon performance of the rotation is excluded.

2. The roller (5; 5a; 5b) according to claim 1, **characterized in that** the magnet (25; 25a; 25b; 35) is positively connected with the stationary bearing (7, 8) at one of its end faces (27, 28).

3. The roller (5; 5a; 5b) according to claim 1 or 2, **characterized in that** the magnet is formed as a permanent magnet (25, 25a, 25b).

4. The roller (5; 5a; 5b) according to one of claims 1 to 3, **characterized in that** several magnets (25, 25a, 25b) are provided.

5. The roller (5; 5a; 5b) according to one of the preceding claims, **characterized in that** the axis (14) extends through a stationarily arranged rod (6).

6. The roller (5; 5a; 5b) according to claim 5, **characterized in that** the rod (6) comprises two separate rod parts (6a, 6b), which are concentrically fastened with respect to each other.

7. The roller (5; 5a; 5b) according to one of the preceding claims, **characterized in that** the adjacently arranged eddy current brakes (22, 22a, 22b) comprise a common shielding tube (21 a), which is fixedly connected with a carrier (15a) fixed on the rod (6) or at least on one of the rod parts (6a, 6b).

8. The roller (5; 5a; 5b) according to claim 1, **characterized in that** the carrier (15a) is arranged between two eddy current brakes (22, 22a).

9. The roller (5; 5a; 5b) according to one of claims 1 to 3, **characterized in that** the magnet is formed as an electromagnet (35).

10. The roller according to claim 9, **characterized in that** the electromagnet (35) is connected with an electric circuit (40), which comprises a variable resistor (41).

## Revendications

1. Galet (5 ; 5a ; 5b) comprenant les caractéristiques suivantes :
- une enveloppe de galet (11 ; 29) tubulaire, qui est montée dans un palier fixe (7, 8) de manière rotative sur un axe (14),
- un frein à courants de Foucault (26) doté d'un capteur à courants de Foucault (13 ; 13a, 13b) tubulaire situé à l'intérieur de l'enveloppe de galet (11) et relié à demeure à celle-ci et d'un aimant (25 ; 25a ; 25b ; 35) relié de manière fixe au palier (7, 8), doté de pôles nord et sud (N, S) disposés à la distance d'un entrefer (c) par rapport au capteur de courants de Foucault (13 ; 13a),
**caractérisé en ce que**
- un tube de blindage (21 ; 21 a) fabriqué en un matériau ferromagnétique, par exemple de l'acier, est conçu de manière dépassant entre l'enveloppe de galet (11) et le capteur à courants de Foucault (13 ; 13a),
- le tube de blindage (21 ; 21 a) est relié à demeure par une extrémité au palier fixe (7, 8),
- le tube de blindage (21 ; 21 a) est disposé à la distance d'un deuxième entrefer (a) par rapport à l'enveloppe de galet (11) et à la distance d'un troisième entrefer (b) par rapport au capteur de courants de Foucault (13 ; 13a),
- le deuxième (a) et le troisième entrefer (b) étant dimensionnés de taille suffisamment importante de telle manière qu'un contact de l'enveloppe de galet (11) et du capteur de courants de Foucault (13 ; 13a) avec le tube de blindage (21 ; 21 a) fixe est exclu lors de l'exécution de la rotation.

2. Galet (5 ; 5a, 5b) selon la revendication 1, **caractérisé en ce que** l'aimant (25 ; 25a ; 25b ; 35) est relié par complémentarité de formes au palier fixe (7, 8) à l'une de ses faces frontales (27, 28).

3. Galet (5 ; 5a, 5b) selon la revendication 1 ou 2, **caractérisé en ce que** l'aimant est conçu en tant qu'aimant permanent (25, 25a, 25b).

4. Galet (5 ; 5a, 5b) selon l'une des revendications 1 à 3, **caractérisé en ce que** plusieurs aimants (25, 25a, 25b) sont prévus.

5. Galet (5 ; 5a ; 5b) selon l'une des revendications précédentes, **caractérisé en ce que** l'axe (14) s'étend à travers une barre (6) disposée de manière fixe.

6. Galet (5 ; 5a ; 5b) selon la revendication 5, **caractérisé en ce que** la barre (6) comporte deux parties de barre (6a, 6b) séparées l'une de l'autre, bloquées de manière concentrique l'une par rapport à l'autre.

7. Galet (5 ; 5a ; 5b) selon l'une des revendications précédentes, **caractérisé en ce que** des freins à courants de Foucault (22, 22a, 22b) disposés de manière adjacente comportent un tube de blindage (21 a) commun, qui est relié à demeure à un support (15a) fixé sur la barre (6) ou au moins l'une des parties de barre (6a, 6b).

8. Galet (5 ; 5a ; 5b) selon la revendication 7, **caractérisé en ce que** le support (15a) est disposé entre deux freins à courants de Foucault (22, 22a).

9. Galet (5 ; 5a, 5b) selon l'une des revendications 1 à 3, **caractérisé en ce que** l'aimant est conçu en tant qu'électroaimant (35).

10. Galet selon la revendication 9, **caractérisé en ce que** l'électroaimant (35) est relié à un circuit électrique (40) qui comporte une résistance de réglage (41).
